# EUROPÄISCHE PATENTANMELDUNG

(11) **EP 2 685 682 A2**
(43) Veröffentlichungstag der Anmeldung: **15.01.2014**
(21) Anmeldenummer: 13003494.5
(22) Anmeldetag: 10.07.2013
(51) Int. Cl.: H04L 12/58, H04L 29/06

(54) **Verfarhen und System zur sicheren Nachrichtenübertragung**

(30) Priorität: 10.07.2012 DE 102012106177
(71) Anmelder: Tutao GmbH, 30449 Hannover (DE)
(72) Erfinder: Möhle, Arne, 30173 Hannover (DE); Gutsche, Thomas, 45130 Essen (DE); Pfau, Matthias, 30625 Hannover (DE)
(74) Vertreter: Günther, Constantin

(57) **Zusammenfassung**

Die Erfindung betrifft ein Verfahren und System zur Übertragung einer elektronischen Nachricht von einem Sendegerät (2) an zumindest ein Empfangsgerät (3), wobei die Nachricht von dem Sendegerät an das Empfangsgerät verschlüsselt übertragen wird und wobei der zum Entschlüsseln benötigte Schlüssel über einen alternativen Kommunikationskanal (13), bspw. via SMS, übertragen wird.

## Beschreibung

Die Erfindung betrifft ein Verfahren zum Übertragen einer elektronischen Nachricht von einem ersten Endgerät eines ersten Benutzers an zumindest ein zweites Endgerät eines zweiten Benutzers, wobei mit Hilfe des ersten Endgerätes die elektronische Nachricht erstellt und über einen ersten elektronischen Übertragungskanal an das zweite Endgerät übertragen wird. Die Erfindung betrifft ebenso ein System hierzu.

Die Übertragung von vertraulichen Informationen auf elektronischem Wege birgt die Gefahr, dass unberechtigte Dritte Kenntnis vom Inhalt der vertraulichen Nachricht erhalten können, ohne dass es von dem Sender oder dem Empfänger bemerkt wird. Insbesondere beim Austausch von vertraulichen Informationen via E-Mail, können die beteiligten Personen nicht hinreichend nachvollziehen, welche Instanzen auf dem Übertragungsweg möglicherweise Kenntnis von dem Inhalt der E-Mail erhalten haben. Insbesondere für Unternehmen besteht daher der Bedarf, den aus dem Geschäftsverkehr nicht mehr wegzudenkenden E-Mail-Service so sicher zu gestalten, dass nur Sender und Empfänger den Inhalt der E-Mail lesen können.

Aus dem Stand der Technik sind einige Verfahren bekannt, die elektronische Nachrichten, wie beispielsweise E-Mails, verschlüsseln können. Hierbei finden in der Regel symmetrische oder asymmetrische Kryptographieverfahren Anwendung, um den Inhalt der elektronischen Nachricht kryptographisch so zu verschlüsseln, dass er ohne den dazugehörigen kryptographischen Schlüssel nicht entzifferbar ist.

Bei den symmetrischen kryptographischen Verfahren wird ein geheimer kryptographischer Schlüssel verwendet, mit dem die Nachricht sowohl ver- als auch entschlüsselt werden kann. Symmetrische Kryptographieverfahren bieten bei hinreichender Schlüssellänge einen ausreichenden Schutz, haben jedoch den entscheidenden Nachteil, dass sowohl dem Sender als auch dem Empfänger der Nachricht der geheime Schlüssel bekannt sein muss. Es bedarf zusätzlichen Aufwandes für die beteiligten Parteien, den geheimen Schlüssel entsprechend zu kommunizieren.

Hierneben existieren noch sogenannte asymmetrische Kryptographieverfahren, bei denen ein sogenanntes Schlüsselpaar bestehend aus einem geheimen und einem öffentlichen Schlüssel zum Einsatz kommt. Der Empfänger, der eine Nachricht von anderen empfangen möchte, veröffentlicht den öffentlichen Schlüssel, so dass potentielle Nachrichtensender mit Hilfe des öffentlichen Schlüssels eine Nachricht verschlüsseln können und sie dann so verschlüsselt zu dem Empfänger übertragen können. Eine mit einem öffentlichen Schlüssel verschlüsselte elektronische Nachricht kann dabei nur noch mit dem geheimen Schlüssel wieder entschlüsselt werden, den ausschließlich der Empfänger kennen sollte. Mit einem öffentlichen Schlüssel können derartige verschlüsselte Nachrichten nicht entschlüsselt werden.

Asymmetrische Kryptographieverfahren beheben somit den Nachteil bezüglich des Schlüsselaustausches bei symmetrischen Verschlüsselungsverfahren, indem sie einen öffentlichen Schlüssel ausschließlich für die Verschlüsselung elektronischer Nachrichten bereitstellen, während die Entschlüsselung ausschließlich mit Hilfe des dazugehörigen geheimen Schlüssels erfolgen kann. Asymmetrische Kryptographieverfahren haben jedoch den Nachteil, dass für jeden Empfänger zunächst der öffentliche Schlüssel durch den Sender ermittelt werden muss, was insbesondere bei einer großen Anzahl von Empfängerkontakten ein organisatorisches Problem darstellen kann. Geht darüber hinaus beim Empfänger einer so verschlüsselten Nachricht der geheime Schlüssel bezüglich eines öffentlichen Schlüssels verloren, so sind die verschlüsselten Daten in der Regel unwiederbringlich verloren.

Es befinden sich sichere E-Mail-Systeme im Aufbau, bei denen dort registrierte Benutzer eine E-Mail-Adresse erhalten und zu der jeweiligen E-Mail-Adresse ein Schlüsselpaar bestehend aus einem privaten Schlüssel und einem öffentlichen Schlüssel in einer Datenbank hinterlegt werden. Werden nun elektronische Nachrichten via E-Mail von einem registrierten Benutzer an einen anderen gesendet, so kann die Ver- und Entschlüsselung mit Hilfe eines asymmetrischen Kryptographieverfahrens automatisiert erfolgen, da über die Datenbank auf den öffentlichen Schlüssel des Empfängers zurückgegriffen werden kann.

Der Nachteil eines solchen Systems besteht jedoch darin, dass ein sicherer E-Mail-Verkehr nur innerhalb der dort registrierten Benutzer möglich ist. Soll jedoch eine E-Mail an einen Benutzer gesendet werden, dessen E-Mail-Adresse nicht in dem System registriert ist, so greift ein asymmetrisches Kryptographieverfahren hier ins Leere, da in der Regel der öffentliche Schlüssel des nicht registrierten Empfängers unbekannt ist.

Aus der DE 10 2010 038 094 A1 ist ein Verfahren mit einer Anordnung zum rechtsverbindlichen Senden und Empfangen von vertraulichen elektronischen Mitteilungen bekannt, bei dem die elektronische Mitteilung mit Hilfe eines Sicherheitsmoduls verschlüsselt und anschließend an den Empfänger übertragen wird, wobei die verschlüsselte Mitteilung dann von einem Empfänger-Sicherheitsmodul entschlüsselt wird. Die hierfür notwendigen Schlüsselinformationen für die Sicherheitsmodule müssen im Vorfeld ausgetauscht werden.

Aus der DE 197 18 103 A1 ist des Weiteren ein Verfahren zur Autorisierung in Datenübertragungssystemen unter Verwendung einer Transaktionsnummer (TAN) bekannt, bei dem die Transaktionsnummer zur Autorisierung eines Vorganges an den Empfänger via Handy oder Pager übertragen wird.

Vor diesem Hintergrund ist es Aufgabe der vorliegenden Erfindung, ein Verfahren und ein System anzugeben, mit dem eine elektronische Nachricht sicher, d.h. hinreichend verschlüsselt, an jeden beliebigen Empfänger übertragen werden kann, ohne dass der Empfänger hierfür bei einem speziellen System angemeldet oder seinen öffentlichen Schlüssel eines asymmetrischen Schlüsselpaares veröffentlichen muss. Aufgabe der vorliegenden Erfindung ist es ebenfalls, dass ein derartiges Verfahren die notwendige Sicherheit aufweist, so dass keine der beteiligten Instanzen an den Inhalt der Nachricht gelangen könnte.

Die Aufgabe wird mit dem Verfahren der eingangs genannten Art erfindungsgemäß gelöst durch die Schritte:
- Verschlüsseln der erstellten elektronischen Nachricht mittels eines kryptographischen Schlüssels durch ein Verschlüsselungsmodul,
- Generieren eines Kommunikationslink durch einen Nachrichtenserver und Abspeichern der verschlüsselten elektronischen Nachricht in einem Datenspeicher unter dem generierten Kommunikationslink,
- Generieren einer den Kommunikationslink enthaltenen elektronischen Hilfsnachricht und Aussenden der elektronischen Hilfsnachricht durch ein Benachrichtigungsmodul an ein Link-Empfangsmodul,
- Aussenden einer den kryptographischen Schlüssel enthaltenen elektronischen Schlüsselnachricht an ein Schlüssel-Empfangsmodul über einen von dem ersten elektronischen Übertragungskanal verschiedenen zweiten elektronischen Übertragungskanal durch ein Schlüsselübertragungsmodul, und
- Abrufen der in dem Datenspeicher abgespeicherten elektronischen Nachricht zur Übertragung an das Empfangsgerät über den ersten elektronischen Übertragungsweg mit dem in der elektronische Hilfsnachricht enthaltenen Kommunikationslink durch ein Abrufmodul, wobei die verschlüsselte elektronische Nachricht durch ein Entschlüsselungsmodul mittels des über den zweiten Kommunikationskanal an das Schlüssel-Empfangsmodul übertragenen kryptographischen Schlüssels entschlüsselt wird.

Erfindungsgemäß wird somit ein Verfahren zum Übertragen einer elektronischen Nachricht von einem Sendegerät an ein Empfangsgerät in sicherer Art und Weise derart vorgeschlagen, dass die elektronische Nachricht von einem Verschlüsselungsmodul verschlüsselt und in einem Datenspeicher eines Nachrichtenservers verschlüsselt hinterlegt wird. Die elektronische Nachricht wird dabei mittels eines kryptographischen Schlüssels verschlüsselt, wobei zum Verschlüsseln bekannte kryptographische Verfahren wie beispielsweise AES Anwendung finden können. Die so verschlüsselte elektronische Nachricht wird in dem Datenspeicher des Nachrichtenservers dabei unter einem Kommunikationslink so abgespeichert, dass mit Hilfe des Kommunikationslinks auf die verschlüsselte Nachricht zugegriffen werden kann. Vorteilhafter Weise ist der Kommunikationslink eine auf den Protokollen des Internets (http, https, ftp, imap, usw.) basierende Adresse.

Anschließend wird dem Empfänger der verschlüsselten elektronischen Nachricht, die nunmehr in dem Datenspeicher hinterlegt ist, eine elektronische Hilfsnachricht durch ein Benachrichtigungsmodul an ein Link-Empfangsmodul übermittelt, die den Kommunikationslink bzw. Adresslink zu der eigentlichen elektronischen Nachricht enthält. Das Übermitteln dieser elektronischen Hilfsnachricht kann beispielsweise an das Empfangsgerät des zweiten Benutzers, auf dem das Link-Empfangsmodul vorgesehen ist, als Nachrichtenempfänger über den ersten elektronischen Übertragungskanal, über den die eigentliche elektronische Nachricht übermittelt werden soll, erfolgen.

Ist die zu übermittelnde elektronische Nachricht eine E-Mail und soll diese E-Mail von dem Sendegerät an das Empfangsgerät über einen ersten elektronischen Übertragungskanal, also beispielsweise über einen netzwerkbasierten Übertragungskanal, übermittelt werden, so ist es besonders vorteilhaft, wenn die elektronische Hilfsnachricht mit dem Kommunikationslink ebenfalls über den netzwerkbasierten ersten elektronischen Übertragungskanal als E-Mail an das Empfangsgerät übertragen wird. Somit erhält der eigentliche Nachrichtenempfänger eine E-Mail mit dem Hinweis, dass für ihn eine Nachricht vorliegt.

Parallel hierzu wird der kryptographische Schlüssel, mit dem die eigentliche elektronische Nachricht verschlüsselt wurde, über einen von dem ersten elektronischen Übertragungskanal verschiedenen zweiten elektronischen Übertragungskanal an ein Schlüssel-Empfangsmodul des Nachrichtenempfänger durch ein Schlüsselübertragungsmodul ausgesendet, damit dieser die Möglichkeit hat, die für ihn hinterlegte elektronische Nachricht zu entschlüsseln. Das Schlüssel-Empfangsmodul kann auf einem von dem Empfangsgerät verschiedenen elektronischen Gerät vorgesehen sein, kann aber auch auf dem Empfangsgerät selbst vorhanden sein.

Hierbei muss allerdings sichergestellt werden, dass der zweite elektronische Übertragungskanal von dem ersten elektronischen Übertragungskanal derart verschieden ist, dass während des Übertragungsprozesses außer der Nachrichtenempfänger (zweiter Benutzer) keine weiteren Komponente in den Besitz sowohl der verschlüsselten elektronischen Nachricht als auch des dazugehörigen kryptographischen Schlüssels gelangen können.

Dies ist beispielsweise dann gegeben, wenn der erste elektronische Übertragungskanal ein netzwerkbasierter Übertragungskanal ist, der auf dem E-Mail-Protokoll beruht und die elektronische Nachricht eine E-Mail ist, während der zweite elektronische Übertragungskanal ein Mobilfunk-Übertragungskanal ist, mit dem der kryptographische Schlüssel via SMS an den zweiten Benutzer gesendet wird.

Nachdem der zweite Benutzer als Nachrichtenempfänger sowohl die elektronische Hilfsnachricht mit dem Kommunikationslink als auch den kryptographischen Schlüssel über den zweite elektronischen Übertragungskanal übermittelt bekommen hat, kann die elektronische Nachricht nun abgerufen werden. Hierzu wird die unter dem Kommunikationslink auf dem Datenspeicher abgespeicherte verschlüsselte elektronische Nachricht abgerufen und mittels des kryptograpfische Schlüssel durch ein Entschlüsselungsmodul entschlüsselt. Die elektronische Nachricht liegt nunmehr im Klartext vor und kann von dem zweiten Benutzer als Nachrichtenempfänger wahrgenommen werden.

Hierdurch wird es möglich, dass einem Nachrichtenempfänger eine verschlüsselte elektronische Nachricht übermittelt werden kann, ohne dass dem Nachrichtensender der öffentliche Schlüssel des Empfängers bekannt ist. Vielmehr bedarf es für den Erfolg der vorliegenden Erfindung noch nicht einmal, dass der Nachrichtenempfänger sich ein derartiges Schlüsselpaar bestehend aus privatem und öffentlichem Schlüssel generiert. Es reicht vielmehr aus, dass dem Nachrichtensender in irgendeiner Form die Möglichkeit eines zweiten elektronischen Übertragungskanals an den Nachrichtenempfänger bereitsteht, beispielsweise in Form der Kenntnis einer Telefonnummer.

Ein weiterer Vorteil besteht darin, dass durch den Kommunikationslink und dem Abrufen der Nachricht hierüber die notwendigen Entschlüsselungsalgorithmen zur Verfügung gestellt werden können, bspw. derart, dass bei Abrufen der Nachricht das Entschlüsselungsmodul auf das Empfangsgerät heruntergeladen wird.

Mit von dem ersten elektronischen Übertragungskanal verschiedenen zweiten elektronischen Übertragungskanal ist gemeint, dass die an der Übertragung einer elektronischen Nachricht über den ersten elektronischen Übertragungskanal beteiligten Komponenten von denjenigen verschieden sind, die an der Übertragung einer elektronischen Nachricht über den zweiten elektronischen Übertragungskanal beteiligt sind. Somit wird sichergestellt, dass zu keinem Zeitpunkt eine Komponente eines Übertragungskanals sowohl im Besitz der verschlüsselten Nachricht als auch im Besitz des kryptographischen Schlüssels ist. Dies stellt die notwendige Sicherheit der Übertragung sicher.

Vorteilhafter Weise wird der kryptographische Schlüssel mittels eines Mobilfunk-Übertragungskanals, mittels eines Telekommunikations-Übertragungskanals oder mittels eines sprachbasierten elektronischen Übertragungskanals an den zweiten Benutzer übertragen. Der kryptographische Schlüssel kann beispielsweise mittels des Mobilfunk-Übertragungskanals via SMS, MMS oder RCS-e übertragen werden. Hierzu benötigt der Nachrichtensender die Telefonnummer des Nachrichtenempfängers als zusätzliche Information. Der kryptographische Schlüssel kann aber auch mittels des Telekommunikations-Übertragungskanals via Fax oder einer Mobiltelefon-Applikation übertragen werden. Eine Mobiltelefon-Applikation kann beispielsweise eine auf den gängigsten Smartphones installierte Programmapplikation (kurz App genannt) sein, die kommunizierend mit dem Nachrichtenserver in Verbindung steht. Denkbar ist aber auch, dass der kryptographische Schlüssel mittels des sprachbasierten elektronischen Übertragungskanals via eines Telefonanrufes an den zweiten Benutzer übertragen wird, wobei der Telefonanruf automatisiert erfolgen kann.

Vorteilhafter Weise wird mit Hilfe des Sendegerätes eine internetbasierte Kommunikationsverbindung als Teil des ersten elektronischen Übertragungsweges zu einem in dem Nachrichtenserver vorgesehenen Web-Modul hergestellt, um die elektronische Nachricht mit Hilfe des Sendegerätes zu erstellen. Der erste Benutzer als Nachrichtensender benötigt somit keine zusätzliche Software auf seinem Sendegerätes zum Erstellen der elektronischen Nachricht, sondern kann dies beispielsweise mit Hilfe eines Internet-Browsers über die internetbasierte Kommunikationsverbindung durchführen. Die elektronische Nachricht kann somit direkt mit Hilfe des Sendegerätes online erstellt werden.

Darüber hinaus ist es ebenfalls besonders vorteilhaft, wenn mit Hilfe des Empfangsgerätes eine internetbasierte Kommunikationsverbindung als Teil des ersten elektronischen Übertragungsweges zu einem in dem Nachrichtenserver vorgesehenen Web-Modul hergestellt werden kann. Mittels des bereits an Link-Empfangsmodul übertragenen Kommunikationslink kann nun eine Abrufanfrage an den Nachrichtenserver über die internetbasierte Kommunikationsverbindung gesendet werden, um die in dem Datenspeicher des Nachrichtenservers hinterlegte elektronische Nachricht mit dem Kommunikationslink abzurufen. Hierdurch wird es möglich, dass mit Hilfe des Kommunikationslinks der zweite Benutzer seine für ihn hinterlegte elektronische Nachricht online, bspw. mittels eines Browsers, abrufen und ansehen kann. Der Kommunikationslink dient dabei zur Identifizierung der abgespeicherten verschlüsselten elektronische Nachricht.

In einer besonders vorteilhaften Ausführungsform wird von dem Nachrichtenserver beim Erhalt der Abrufanfrage die hinterlegte verschlüsselte elektronische Nachricht aus dem Datenspeicher ermittelt und dann an das Empfangsgerätes in verschlüsselter Form übertragen, wobei die verschlüsselte elektronische Nachricht dann auf dem Empfangsgerätes mittels des kryptographischen Schlüssels durch das Entschlüsselungsmodul entschlüsselt wird. Dies hat hierbei den Vorteil, dass der Nachrichtenserver, der beispielsweise im Verbund aus mehreren Servern bestehen kann, zu keinem Zeitpunkt sowohl im Besitz der verschlüsselten elektronischen Nachricht als auch des kryptographischen Schlüssels ist. Das Übertragen der verschlüsselten elektronischen Nachricht kann dabei an ein Entschlüsselungsmodul erfolgen, das auf dem Empfangsgerät vorgesehen ist, auf dem auch das Link-Empfangsmodul vorhanden ist. Denkbar ist aber auch, dass das Link-Empfangsmodul auf einem separaten Gerät vorgesehen ist, so dass durch die Abrufanfrage ein Übertragen der Nachricht an das Empfangsgerät initiiert wird. Hierfür kann sich das Empfangsgerät zuvor beim Nachrichtenserver authentifiziert haben, beispielsweise mittels eines Authentifizierungslinks, enthalten in der elektronischen Schlüsselnachricht.

Hierbei ist es ganz besonders vorteilhaft, wenn nach der Herstellung der internetbasierten Kommunikationsverbindung das Entschlüsselungsprogramm heruntergeladen und auf dem Empfangsgerät ausgeführt wird. Dadurch kann sichergestellt werden, dass immer das richtige Entschlüsselungsprogramm für die Entschlüsselung verwendet wird. Das Entschlüsselungsprogramm kann so ausgebildet sein, dass es in einer Browser-Anwendung als Applikation ausführbar ist, bspw. in Form eines JAVA-Programms, JavaScript-Programms oder ähnlichem.

Die Übertragung des kryptographischen Schlüssels von dem Schlüssel-Empfangsmodul an das Entschlüsselungsmodul des Empfangsgerätes zum Entschlüsseln der Nachricht kann dabei sowohl über einen elektronischen Übertragungskanal als auch derart erfolgen, dass der kryptographische Schlüssel durch den zweiten Benutzer auf dem Empfangsgerätes mittels eines Schlüssel-Eingabemoduls eingegeben wird.

In einer weiteren Ausführungsform ist das Link-Empfangsmodul auf einem zusätzlichen Link-Empfangsgerät vorgesehen, das von dem Empfangsgerät verschieden ist. Mit Hilfe des Kommunikationslinks wird nun eine Abrufanfrage an den Nachrichtenserver gestartet, so dass die verschlüsselte elektronische Nachricht auf das Empfangsgerät bzw. an das Entschlüsselungsmodul übertragen werden kann. Dies kann bspw. so erfolgen, dass durch die Abrufanfrage die Nachricht an das Endgerät von dem Datenspeicher übertragen wird oder dass an das Empfangsgerät der Kommunikationslink gesendet wird, wobei die Nachricht dann von dem Empfangsgerät mit Hilfe des Kommunikationslink heruntergeladen wird. Die Nachricht kann aber auch zuerst von dem Link-Empfangsgerät mit Hilfe des Kommunikationslink heruntergeladen und dann auf das Empfangsgerät übertragen werden, bspw. über den Nachrichtenserver. Das Empfangsgerät meldet sich hierfür mittels eines Authentifizierungslinks an dem Nachrichtenserver an.

Denkbar ist aber auch, dass das Link-Empfangsmodul auf dem Empfangsgerät und das Schlüssel-Empfangsmodul auf einem zusätzlichen dritten elektronischen Gerät vorgesehen ist.

In einer weiteren Ausführungsform kann die mittels des Kommunikationslinks an den Nachrichtenserver gestellte Abrufanfrage von dem Nachrichtenserver so bearbeitet werden, dass der kryptographische Schlüssel an den Nachrichtenserver übertragen und die verschlüsselte elektronische Nachricht auf dem Nachrichtenserver mittels des übertragenen kryptographischen Schlüssels entschlüsselt wird, wobei die so entschlüsselte elektronische Nachricht von dem Nachrichtenserver an das Empfangsgerät über die internetbasierte Kommunikationsverbindung übertragen wird. D. h., der Nachrichtenserver entschlüsselt dann die hinterlegte elektronische Nachricht und überträgt die so entschlüsselte elektronische Nachricht an das Empfangsgerät so, dass sie beispielsweise in einem Browserfenster angezeigt werden kann. Das Herunterladen eines speziellen Programms ist dann nicht mehr notwendig.

Vorteilhafter Weise ist die internetbasierte Kommunikationsverbindung eine verschlüsselte Verbindung, beispielsweise mit SSL.

Der kryptographische Schlüssel kann beispielsweise so eingerichtet sein, dass er mittelbar oder unmittelbar die elektronische Nachricht verschlüsseln kann. Unmittelbar bedeutet, dass der kryptographische Schlüssel direkt als Parameter für das verwendete Verschlüsselungsverfahren dient. Wird der kryptographische Schüssel mittelbar verwendet, so wird aus dem kryptographischen Schlüssel beispielsweise ein symmetrischer kryptographischer Schlüssel generiert, der dann als Parameter für das zugrunde liegende Verschlüsselungsverfahren dient.

So ist es beispielsweise denkbar, dass beim Erstellen der elektronischen Nachricht ein zufälliges Kennwort (kryptographischer Schlüssel) generiert wird, aus dem dann mit Hilfe von geeigneten Verfahren, beispielsweise Hash-Funktionen, ein symmetrischer kryptographischer Schlüssel zum Verschlüsseln der elektronischen Nachricht generiert wird. Beim Entschlüsseln der Nachricht braucht der Benutzer nunmehr lediglich das Kennwort als kryptographischen Schlüssel eingeben, wobei dann aus dem Kennwort wiederum der symmetrische Schlüssel generiert und die elektronische Nachricht entschlüsselt werden kann.

In einer weiteren vorteilhaften Ausführungsform wird der an das Schlüssel-Empfangsmodul übertragende kryptographische Schlüssel nicht durch den zweiten Benutzer an dem Empfangsgerät händisch eingegeben, sondern der Schlüsselaustausch zwischen dem Schlüssel-Empfangsmodul und dem Empfangsgerät erfolgt automatisiert. Hierzu wird mit Hilfe eines Schlüsselgenerierungsmoduls ein asymmetrischer kryptographischer Schlüssel bestehend aus einem ersten Schlüsselteil (öffentlich) und einem zweiten Schlüsselteil (geheim) erzeugt, bspw. durch ein Schlüsselgenerierungsmodul, das auf dem Sendegerät vorgesehen ist. Mit Hilfe des asymmetrischen kryptographischen Schlüssels kann dann der kryptographische Schlüssel zum Entschlüsseln der verschlüsselten elektronischen Nachricht von dem Schlüssel-Empfangsmodul an das Empfangsgerät über einen elektronischen Übertragungskanal sicher übertragen werden. Hierfür kann bspw. der kryptographische Schlüssel Teil einer elektronischen Schlüsselnachricht zusammen mit einem Authentifizierungslink sein, womit das Schlüssel-Empfangsmodul beim Nachrichtenserver authentifiziert werden kann.

Hierfür ist es bspw. denkbar, dass der erste Schlüsselteil (öffentlich) an das Empfangsgerät und der zweite Schlüsselteil (geheim) an das Schlüssel-Empfangsmodul übertragen wird. Mit Hilfe einer Schlüsselaustauscheinrichtung bestehend aus einem ersten Schlüssel-Austauschmodul und einem zweiten Schlüssel-Austauschmodul kann nun der Austausch des kryptographischen Schlüssels von dem Schlüssel-Empfangsmodul an das Empfangsgerät derart erfolgen, dass zunächst auf dem Empfangsgerät ein kryptographischer Hilfsschlüssel generiert und mit Hilfe des öffentlichen, ersten Schlüsselteils durch das erste Schlüssel-Austauschmodul verschlüsselt wird. Dieser so verschlüsselte kryptographische Hilfsschlüssel wird dann an das Schlüssel-Empfangsmodul übertragen, wo er dann mit Hilfe des zweiten, geheimen Schlüsselteils durch das zweite Schlüssel-Austauschmodul wieder entschlüsselt werden kann. Mit Hilfe des kryptographischen Hilfsschlüssels, der nun sicher an das dritte Endgerät übertragen werden konnte, kann nun der kryptographische Schlüssel zum Entschlüsseln der elektronischen Nachricht verschlüsselt und zurück an das Empfangsgerät übertragen werden. Auf dem Empfangsgerät ist der elektronische Hilfsschlüssel, der zuvor generiert wurde, noch vorhanden und wird nun zum Entschlüsseln des verschlüsselten kryptographischen Schlüssels verwendet.

Somit kann sichergestellt werden, dass der kryptographische Schlüssel, der an das Schlüssel-Empfangsmodul übertragen wurde, sicher über einen elektronischen Weg an das Empfangsgerät übertragen werden kann.

Hierfür ist es bspw. denkbar, dass an das dritte Endgerät ein weiterer Kommunikationslink gesendet wird, mit dem das dritte Endgerät eine Kommunikationsverbindung zu dem Nachrichtenserver aufbauen kann, so dass der Schlüssel-Austausch des kryptographischen Schlüssels auf dem sicheren Weg über den Nachrichtenserver erfolgen kann. Eine direkte Kombinationsverbindung zwischen dem Empfangsgerät und dem Schlüssel-Empfangsmodul ist somit nicht erforderlich.

In einer weiteren vorteilhaften Ausführungsform wird der kryptographische Schlüssel über den zweiten elektronischen Übertragungsweg nicht direkt von dem Sendegerät an das Empfangsgerät übertragen, sondern mit Hilfe eines Serviceproviders, beispielsweise eines SMS-Serviceproviders. Ein derartiger Serviceprovider stellt dabei einen elektronischen Übermittlungsdienst zur Verfügung, mit dem Nachrichten über verschiedene Übertragungsprotokolle und Übertragungsnetze basierend auf unterschiedlichsten Technologien übertragen werden können. Ein Beispiel hierfür stellt ein SMS-Serviceprovider dar, der eine SMS an eine ihm bekannt gegebene Telefonnummer über das Mobilfunknetz überträgt. Denkbar sind aber auch andere Serviceprovider mit derartigen Funktionalitäten.

Hierfür wird nun der kryptographische Schlüssel mit Hilfe des öffentlichen Schlüssels eines asymmetrischen kryptographischen Schlüssels des Serviceproviders durch das Sendegerät verschlüsselt und so verschlüsselt an den Nachrichtenserver übertragen, um den so verschlüsselten kryptographischen Schlüssel in den Datenspeicher zu hinterlegen. Erhält der Nachrichtenserver die Anforderung zur Übertragung des kryptographischen Schlüssels an das Schlüssel-Empfangsmodul, beispielsweise von dem Empfangsgerät im Zusammenhang mit dem Abruf der verschlüsselten Nachricht aus dem Datenspeicher, so wird der verschlüsselte kryptographische Schlüssel an den Serviceprovider gesendet. Handelt es sich um einen SMS-Serviceprovider, so wird dem SMS-Serviceprovider auch die Telefonnummer mitgeteilt, die der Nachrichtenserver beispielsweise von dem Sendegerät erhalten und zusammen mit dem verschlüsselten kryptographischen Schlüssel abgespeichert hat.

Der Serviceprovider kann nun den verschlüsselten kryptographischen Schlüssel mit Hilfe des privaten Schlüssels des asymmetrischen kryptographischen Schlüssels, der nur dem Serviceprovider bekannt ist, entschlüsseln, so dass das Schlüsselübertragungsmodul den kryptographischen Schlüssel über den zweiten elektronischen Übertragungskanal an das Empfangsmodul übertragen kann. So kann der entschlüsselte kryptographische Schlüssel von dem Serviceprovider beispielsweise in Form einer SMS an das Schlüssel-Empfangsmodul übertragen werden.

Hierdurch entsteht der Vorteil, dass das Sendegerät selber nicht eine Verbindung zu dem zweiten elektronischen Übertragungskanal bereitstellen muss, sondern lediglich eine Kommunikationsverbindung mit dem Nachrichtenserver. Diese erhält neben der verschlüsselten Nachricht auch den dazugehörigen kryptographischen Schlüssel, allerdings verschlüsselt, so dass der Nachrichtenserver nicht in der Lage ist, die verschlüsselte Nachricht zu entschlüsseln. Der Serviceprovider, der in der Regel von dem Dienstanbieter des Nachrichtenserver verschieden ist, kann hingegen den kryptographischen Schlüssel entschlüsseln, kennt jedoch nicht die verschlüsselte elektronische Nachricht, so dass auch der Serviceprovider nicht in der Lage ist, die elektronische Nachricht zu lesen. Dies maximiert die Sicherheit und den Komfort in Bezug auf den Schlüsselaustausch.

Um ein Eingeben des kryptographischen Schlüssels an dem Empfangsgerät zu vermeiden und einen automatisierten Austausch des kryptographischen Schlüssels zwischen dem Schlüssel-Empfangsmodul und dem Empfangsgerät zu gewährleisten, ist es ganz besonders vorteilhaft, wenn zunächst das Empfangsgerät einen weiteren kryptographischen Übertragungsschlüssel generiert, der mit dem öffentlichen Schlüssel des Serviceproviders verschlüsselt wird. Anschließend wird der so verschlüsselte kryptographische Übertragungsschlüssel an den Serviceprovider übertragen, beispielsweise über den Nachrichtenserver bei Anforderung zur Übertragung des kryptographischen Schlüssels an das Schlüssel-Empfangsmodul.

Hat der Serviceprovider den verschlüsselten kryptographischen Übertragungsschlüssel erhalten, so kann er diesen mit seinem eigenen privaten Schlüssel des asymmetrischen Schlüssels entschlüsseln und erhält so den kryptographischen Übertragungsschlüssel. Mit diesem kryptographischen Übertragungschlüssel kann der Serviceprovider nun den entschlüsselten kryptographischen Schlüssel verschlüsseln und ihn so verschlüsselt an das Schlüssel-Empfangsmodul übertragen.

Der so verschlüsselte kryptographische Schlüssel wird nun von dem Schlüssel-Empfangsmodul an das Empfangsgerät, konkreter an das Entschlüsselungsmodul, übertragen, beispielsweise über den Nachrichtenserver. Da der kryptographische Schlüssel mit einem kryptographischen Übertragungsschlüssel verschlüsselt ist, und lediglich das Empfangsgerät diesen kryptographischen Übertragungsschlüssel kennt, kann der Nachrichtenserver nicht in Besitz des kryptographischen Schlüssels gelangen. Vielmehr wird der verschlüsselte kryptographische Schlüssel von dem Nachrichtenserver dann an das Empfangsgerät übertragen, wo er dann mit Hilfe des dort zwischengespeicherten kryptographischen Übertragungsschlüssels entschlüsselt werden kann und so zur Entschlüsselung der verschlüsselten elektronischen Nachrichten durch das Entschlüsselungsmodul verwendet werden kann.

Mit Hilfe dieses zusätzlichen, automatisierten Schlüsselaustausches wird es möglich, den kryptographischen Schlüssel zum entschlüsseln der elektronischen Nachricht von dem Schlüssel-Empfangsmodul über den Nachrichtenserver an das Empfangsgerät zu übertragen, ohne dass der Nachrichtenserver in Besitz des kryptographischen Schlüssels gelangt. Dieses maximiert die Sicherheit und den Komfort, insbesondere dann, wenn das Schlüssel-Empfangsmodul nicht auf dem Empfangsgerät angeordnet ist.
Die Aufgabe wird im Übrigen auch mit dem System zum Übertragen einer elektronischen Nachricht gemäß den Merkmalen des Anspruchs 11 gelöst.

Die Erfindung wird anhand der beigefügten Figuren beispielhaft näher erläutert.

Es zeigen:
- Figur 1: - Schematische Darstellung des erfindungsgemäßen Systems zur sicheren Übertragung von elektronischen Nachrichten;
- Figur 2: - Schematische Darstellung des erfindungsgemäßen Systems mit automatischem Schlüsselaustausch.

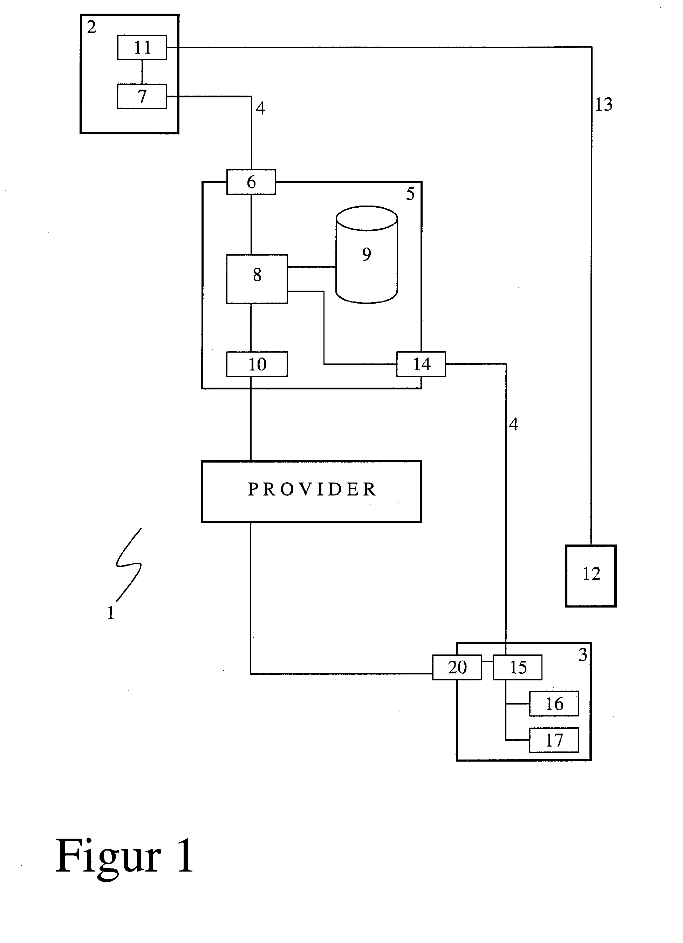

Figur 1 zeigt schematisch das erfindungsgemäße System 1 zum Übertragen einer elektronischen Nachricht von einem Sendegerät 2 an ein Empfangsgerät 3. Die Übertragung der elektronischen Nachricht wird dabei über einen ersten elektronischen Übertragungskanal 4 erfolgen.

Ein derartiger elektronischer Übertragungskanal 4 kann bspw. ein internetbasierter Kommunikationskanal sein.

Mit Hilfe des Sendegerätes 2 wird die elektronische Nachricht erstellt, in dem das Sendegerät 2, bspw. im Computer oder Laptop, sich mit einem Web-Modul 6 eines Nachrichtenservers 5 verbindet. Das Web-Modul 6 des Nachrichtenservers 5 stellt dabei eine Internetplattform bereit, auf der sich der Benutzer des Sendegerät 2 registrieren und einloggen kann. Zwischen dem Sendegerät 2 und dem Web-Modul 6 des Nachrichtenservers 5 besteht somit eine internetbasierte Kommunikationsverbindung, bspw. basierend auf dem klassischen Protokoll in http oder https als Teil des ersten elektronischen Übertragungskanals 4.

Auf dem Sendegerät 2 ist ein Verschlüsselungsmodul 7 vorgesehen, welches zum Verschlüsseln der mit Hilfe des Sendegerätes 2 erstellten elektronischen Nachricht eingerichtet ist. Das Verschlüsselungsmodul 7 kann dabei bspw. als Teil einer Web-Applikation von dem Web-Modul 6 beim Verbinden auf das Sendegerät 2 heruntergeladen und im Web-Browser des Sendegerätes 2 ausgeführt werden. Denkbar ist aber auch, dass das Verschlüsselungsmodul 7 eine eigenständige Programmapplikation zu einem zusätzlichen E-Mail-Programm darstellt.

Denkbar ist auch, dass das Verschlüsselungsmodul 7 Teil des Nachrichtenservers 5 ist, wobei dann die Verschlüsselung der erstellten elektronischen Nachricht auf dem Nachrichtenserver 5 durch das Verschlüsselungsmodul 7 erfolgt. In dieser Ausführungsform kann jedoch nicht mehr sichergestellt werden, dass die beteiligten Komponenten nicht im Besitz sowohl der Nachricht als auch des Schlüssels sind. Bevorzugt ist daher die Verschlüsselung mit Hilfe des Verschlüsselungsmoduls 7 auf dem Sendegerät 2 zu sehen.

Nachdem die erstellte elektronische Nachricht mit Hilfe des Verschlüsselungsmoduls 7 verschlüsselt wurde, wird die so verschlüsselte elektronische Nachricht über den ersten elektronischen Übertragungskanal 4 an den Nachrichtenserver 5 gesendet. Mit Hilfe einer auf dem Nachrichtenserver 5 vorhandenen Recheneinheit 8 wird für die verschlüsselte elektronische Nachricht ein Kommunikationslink generiert und anschließend die verschlüsselte elektronische Nachricht unter dem Kommunikationslink in einem Datenspeicher 9 hinterlegt.

Anschließend wird mit Hilfe eines Benachrichtigungsmoduls 10, das im Ausführungsbeispiel der Figur 1 ebenfalls Bestandteil des Nachrichtenservers 5 ist, eine elektronische Hilfsnachricht generiert, die den zuvor generierten Kommunikationslink, unter dem die verschlüsselte elektronische Nachricht, die im Datenspeicher 9 abgespeichert ist, enthält. Eine solche elektronische Hilfsnachricht kann bspw. eine E-Mail sein, die dann mit Hilfe des Benachrichtigungsmoduls 10 über einen E-Mail-Provider an ein Link-Empfangsmodul 20 übertragen wird.

Das Link-Empfangsmodul 20 kann Bestandteil des Empfangsgerätes 3 sein, bspw. ein E-Mail Client. Denkbar ist aber auch, dass das Link-Empfangsmodul 20 auf einem Link-Empfangsgerät vorgesehen ist, das von dem Empfangsgerät 3 verschieden ist.

Des Weiteren ist es denkbar, dass das Benachrichtigungsmodul 10 Bestandteil der Web-Applikation des Sendegerätes 2 ist, so dass von dem Sendegerät 2 aus die elektronische Hilfsnachricht an das Link-Empfangsmodul 20 über den E-Mail-Provider gesendet wird.

Der in der elektronischen Hilfsnachricht enthaltene Kommunikationslink kann bspw. eine Internetadresse sein, unter der die verschlüsselte elektronische Nachricht aus dem Datenspeicher 9 abgerufen werden kann.

Der zum Verschlüsseln der elektronischen Nachricht verwendete kryptographische Schlüssel muss nun ebenfalls dem zweiten Benutzer kommuniziert werden. Hierfür weist das Sendegerät 2 ein Schlüsselübertragungsmodul 11 auf, das ebenfalls Bestandteil einer im Browser ausgeführten Web-Applikation sein kann und mittels des Web-Moduls 6 des Nachrichtenservers 5 an das Sendegerät 2 bei Verbindungsherstellung übertragen werden kann. Der kryptographische Schlüssel wird dabei mit Hilfe des Schlüsselübertragungsmoduls 11 an ein Schlüssel-Empfangsmodul 12 des zweiten Benutzers übertragen, das bspw. ein zusätzliches elektronisches Endgerät, wie bspw. Mobiltelefon bzw. Smartphone sein kann. Die Übertragung kann bspw. per SMS oder MMS erfolgen, wobei das Schlüsselübertragungsmodul 11 hierfür eine Verbindung zu einem entsprechenden SMS-Service im Internet herstellen und den Schlüssel hierüber an das Schlüssel-Empfangsmodul 12 übertragen kann.

Die Übertragung des kryptographischen Schlüssels von dem Schlüsselübertragungsmodul 11 an das Schlüssel-Empfangsmodul 12 erfolgt über einen zweiten elektronischen Übertragungskanal 13, der von dem ersten elektronischen Übertragungskanal 4 so verschieden ist, dass die für die elektronische Übertragung vorgesehenen Komponenten jeweils verschieden sind. Der zweite Übertragungskanal 13 ist zumindest so eingerichtet, dass die Übertragung des kryptographischen Schlüssels von dem Sendegerät 2 an das Schlüssel-Empfangsmodul 12 nicht über den Nachrichtenserver 5 erfolgt.

Für den zweiten Übertragungskanal 13 sind verschiedene Übertragungstechniken denkbar, wie beispielsweise SMS, MMS, Fax aber auch E-Mail, sofern ein anderer E-Mail-Provider als der für die elektronische Hilfsnachricht verwendete vorgesehen ist.

Der kryptographische Schlüssel kann beispielsweise ein Passwort sein, aus dem mit Hilfe von bekannten kryptographischen Algorithmen ein symmetrischer kryptographischer Schlüssel erzeugt werden kann. Denkbar ist aber auch, dass der kryptographische Schlüssel direkt, d. h. unmittelbar für die Verschlüsselung herangezogen wird.

Um nun die verschlüsselte elektronische Nachricht aus dem Datenspeicher 9 des Nachrichtenservers 5 abzurufen, baut das Empfangsgerät 3 eine internetbasierte Kommunikationsverbindung zu einem Webmodul 14 des Nachrichtenservers 5 auf, und zwar als Teil des ersten elektronischen Übertragungskanals 4. Der Aufbau der internetbasierten Kommunikationsverbindung zu dem Webmodul 14 kann dabei bereits durch den in der elektronischen Hilfsnachricht enthaltenen Kommunikationslink initiiert werden, wobei nach Aufbau der Verbindung zu dem Webmodul 14 ebenfalls eine Webapplikation auf das zweite Endgerät herunterladbar ist. Somit wird sichergestellt, dass die entsprechende Funktionalität auf dem Empfangsgerät 3 verfügbar ist, wobei die entsprechende Webapplikation innerhalb des Webbrowsers ausführbar ist.

Das Abrufen der elektronischen Nachricht aus dem Datenspeicher 9 erfolgt dabei beispielsweise mit Hilfe eines Abrufmoduls 15, das Teil des Internet-Browsers sein kann. Das Abrufmodul 15 ruft mit Hilfe des Kommunikationslinks nun die hinterlegte verschlüsselte Nachricht aus dem Datenspeicher 9 ab, so dass diese in verschlüsselter Form auf das Empfangsgerät 3 übertragen wird. Anschließend wird mit Hilfe eines Schlüsseleingabemoduls 16 der kryptographische Schlüssel auf dem Empfangsgerät 3 eingegeben, der zuvor über den zweiten elektronischen Übertragungskanal 13 an das Schlüssel-Empfangsmodul 12 übertragen wurde.

Nach Eingabe des kryptographischen Schlüssels und Herunterladen der verschlüsselten elektronischen Nachricht auf das Empfangsgerät 3 wird nun die verschlüsselte elektronische Nachricht mit Hilfe eines Entschlüsselungsmoduls 17 auf dem Empfangsgerät entschlüsselt, so dass nunmehr die elektronische Nachricht auf dem Empfangsgerät 3 im Klartext vorliegt.

Auch das Entschlüsselungsmodul 17 kann Bestandteil der Webapplikation sein, die von dem Webmodul 14 des Nachrichtenservers 5 herunterladbar und im Internet-Browser des Empfangsgerätes 3 ausführbar ist.

Das Schlüssel-Empfangsmodul 12 kann bspw. auch Bestandteil des Empfangsgerätes 3 sein (nicht dargestellt), so dass sämtliche Funktionalitäten des sicheren E-Mail Empfangs in einem Endgerät integriert sind.

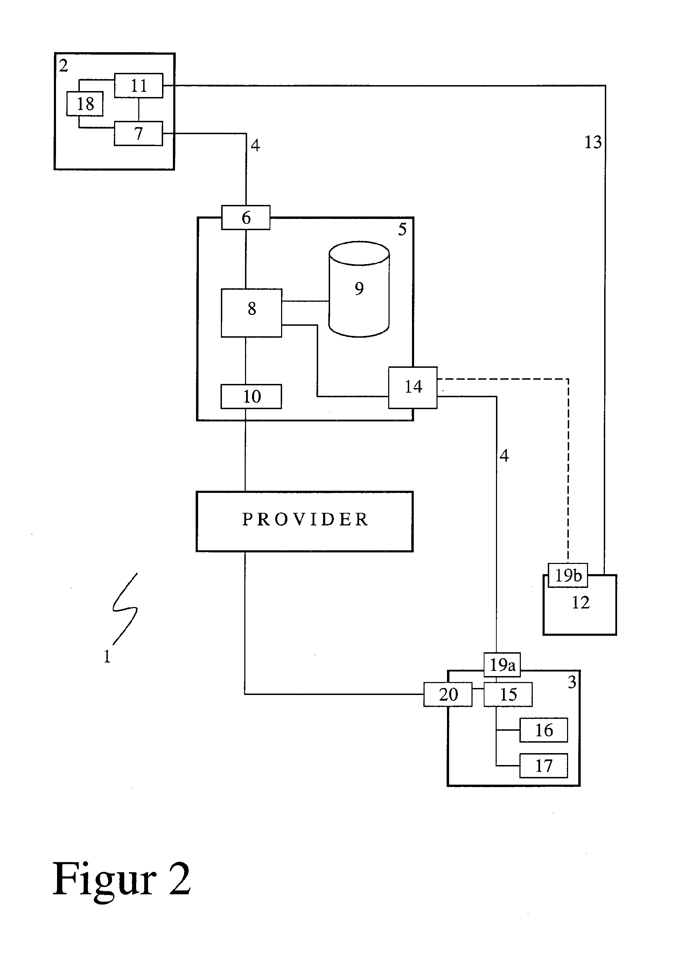

Die Übertragung des kryptographischen Schlüssels von dem Schlüssel-Empfangsmodul 12 an das Empfangsgerät 3 erfolgt im Ausführungsbeispiel der Figur 1 manuell durch den zweiten Benutzer, d. h. der zweite Benutzer muss den kryptographischen Schlüssel bzw. das Passwort direkt an dem Empfangsgerät 3 eingeben. Figur 2 zeigt für die Übertragung des kryptographischen Schlüssels von dem Schlüssel-Empfangsmodul 12 an das Empfangsgerät 3 eine alternative und besonders bevorzugte Ausführungsform, bei der der kryptographische Schlüssel sicher und automatisiert von dem Schlüssel-Empfangsmodul 12 an das Empfangsgerät 3 übertragen wird. Hierfür wird mit Hilfe eines Schlüsselgenerierungsmoduls 18, das auf dem Sendegerät 2 vorgesehen sein kann, ein asymmetrischer kryptographischer Schlüssel bestehend aus einem öffentlichen ersten Schlüsselteil und einem geheimen zweiten Schlüsselteil generiert. Der öffentliche erste Schlüsselteil des asymmetrischen kryptographischen Schlüssels wird dann an den Nachrichtenserver 5 mit übertragen, von wo aus er dann Bestandteil des Kommunikationslinks werden kann. Ist der Kommunikationslink beispielsweise eine http-Internetadresse, so kann der öffentliche erste Schlüsselteil in dem Kommunikationslink mit Hilfe des Rautezeichens # abgetrennt werden, so dass beim Aufruf des Kommunikationslinks durch das Empfangsgerät 3 der öffentliche Schlüssel nicht mit an das Webmodul 14 übertragen wird.

Der zweite, geheime Schlüsselteil wird dann mit Hilfe des Schlüsselübertragungsmoduls 11 zusammen mit dem kryptographischen Schlüssel an das Schlüssel-Empfangsmodul 12 übertragen. Dies kann beispielsweise ebenfalls derart erfolgen, dass an das Schlüssel-Empfangsmodul 12 ebenfalls ein Kommunikationslink gesendet wird, mit dessen Hilfe das Schlüssel-Empfangsmodul 12 eine Verbindung zu dem Webmodul 14 aufbauen kann. Hierdurch wird das Schlüssel-Empfangsmodul 12 temporär bei dem Nachrichtenserver 5 angemeldet, so dass das Empfangsgerät 3 und das Schlüssel-Empfangsmodul 12 über den Nachrichtenserver 5 den kryptographischen Schlüssel mittels des asymmetrischen kryptographischen Schlüssels austauschen können. Auch hier ist es denkbar, dass der Kommunikationslink ein http-Internetlink ist, wobei der geheime, zweite Schlüsselteil und der kryptographische Schlüssel durch ein Rautezeichen abgetrennt sind und somit nicht mit an den Server übertragen werden.

Des Weiteren ist eine Schlüsselaustauscheinrichtung 19 vorgesehen, die ein erstes Schlüssel-Austauschmodul 19a und ein zweites Schlüssel-Austauschmodul 19b aufweist. Das erste Schlüssel-Austauschmodul 19a ist auf dem Empfangsgerät 3 vorgesehen, während das zweite Schlüssel-Austauschmodul 19b mit dem Schlüssel-Empfangsmodul 12 in Verbindung steht. Mit dieser Schlüsselaustauscheinrichtung 19 wird dann der kryptographische Schlüssel ausgetauscht. Dies ist bspw. dann besonders vorteilhaft, wenn das Schlüssel-Empfangsmodul 12 auf einem zusätzlichen elektronischen Endgerät vorgesehen und von dem Empfangsgerät verschieden ist. Dann kann der Schlüssel sicher zwischen diesen beiden elektronischen Geräten über einen elektronischen Übertragungskanal ausgetauscht werden.

Dies kann beispielsweise wie folgt erfolgen. Auf dem Empfangsgerät 3 wird mit Hilfe der Schlüsselaustauscheinrichtung 19 ein temporärer symmetrischer kryptographischer Hilfsschlüssel erzeugt, der dann mit dem öffentlichen, ersten Schlüsselteil verschlüsselt wird. Dieser so verschlüsselte kryptographische Hilfsschlüssel wird dann über den Nachrichtenserver 5 an das Schlüssel-Empfangsmodul 12 und das dortige Schlüssel-Austauschmodul 19b übertragen. Dort wird der verschlüsselte kryptographische Hilfsschlüssel mit Hilfe des zweiten, geheimen Schlüsselteils entschlüsselt, so dass auf dem Schlüssel-Empfangsmodul 12 nunmehr der kryptographische Hilfsschlüssel sicher vorliegt.

Mit Hilfe dieses kryptographischen Hilfsschlüssels wird nun der von dem Sendegerät 2 übertragene kryptographische Schlüssel zum Entschlüsseln der elektronischen Nachricht verschlüsselt und anschließend wieder über den Kommunikationsweg über den Nachrichtenserver 5 an das Empfangsgerät 3 übertragen. Auf dem Empfangsgerät 3 liegt nach wie vor der kryptographische Hilfsschlüssel zwischengespeichert vor, so dass der verschlüsselte kryptographische Schlüssel mit Hilfe des kryptographischen Hilfsschlüssels entschlüsselt werden kann. Auf diese Art und Weise kann sicher der kryptographische Schlüssel von dem Schlüssel-Empfangsmodul 12 auf das Empfangsgerät 3 über den Nachrichtenserver 5 übertragen werden, ohne dass der Nachrichtenserver 5 den kryptographischen Schlüssel unverschlüsselt sieht.

Nun kann auf dem Empfangsgerät 3 mit Hilfe des Entschlüsselungsmoduls 17, wie bereits in Figur 1 gezeigt, die heruntergeladene verschlüsselte elektronische Nachricht entschlüsselt werden.

In einer weiteren nicht dargestellten Ausführungsform ist das Link-Empfangsmodul 20 Bestandteil eines Link-Empfangsgerätes, das von dem Empfangsgerät 3 verschieden ist. Auf dem Empfangsgerät 3 ist sowohl das Schlüssel-Empfangsmodul 12 als auch das Entschlüsselungsmodul 17 vorgesehen. Mittels des Abrufmoduls 15 wird von dem Link-Empfangsgerät das Abrufen der Nachricht initiiert, wobei das Schlüssel-Empfangsmodul 12 ebenfalls eine Verbindung zum Nachrichtenserver aufbauen muss. Anschließend wird entweder der Kommunikationslink von dem Link-Empfangsmodul an das Empfangsgerät übertragen oder die Nachricht wird direkt in das Entschlüsselungsmodul 17 des Empfangsgerätes 3 geladen.

### Bezugszeichenliste

- 1: System
- 2: Sendegerät
- 3: Empfangsgerät
- 4: Erster elektronischer Übertragungskanal
- 5: Nachrichtenserver
- 6: Web-Modul (Erstellen)
- 7: Verschlüsselungsmodul
- 8: Recheneinheit des Nachrichtenservers
- 9: Datenspeicher des Nachrichtenservers
- 10: Benachrichtigungsmodul
- 11: Schlüsselübertragungsmodul
- 12: Schlüssel-Empfangsmodul
- 13: Zweiter elektronischer Übertragungskanal
- 14: Web-Modul (Abruf)
- 15: Abrufmodul
- 16: Schlüsseleingabemodul
- 17: Entschlüsselungsmodul
- 18: Schlüsselgenerierungsmodul
- 19: Schlüsselaustauscheinrichtung
- 20: Link-Empfangsmodul

## Patentansprüche

1. Verfahren zur Übertragung einer elektronischen Nachricht von einem Sendegerät (2) eines ersten Benutzers an zumindest ein Empfangsgerät (3) eines zweiten Benutzers, wobei mit Hilfe des Sendegerätes (2) die elektronische Nachricht erstellt und über einen ersten elektronischen Übertragungskanal (4) an das Empfangsgerät (3) übertragen wird, **gekennzeichnet durch** die Schritte:
- Verschlüsseln der erstellten elektronischen Nachricht mittels eines kryptographischen Schlüssels **durch** ein Verschlüsselungsmodul (7),
- Generieren eines Kommunikationslinks **durch** einen Nachrichtenserver (5) und Abspeichern der verschlüsselten elektronischen Nachricht in einem Datenspeicher (9) unter dem generierten Kommunikationslink,
- Generieren einer den Kommunikationslink enthaltenen elektronischen Hilfsnachricht und Aussenden der elektronischen Hilfsnachricht **durch** ein Benachrichtigungsmodul (10) an ein Link-Empfangsmodul (20),
- Aussenden einer den kryptographischen Schlüssel enthaltenen elektronischen Schlüsselnachricht an ein Schlüssel-Empfangsmodul (12) über einen von dem ersten elektronischen Übertragungskanal (4) verschiedenen zweiten elektronischen Übertragungskanal (13) **durch** ein Schlüsselübertragungsmodul (11), und
- Abrufen der in dem Datenspeicher (9) abgespeicherten elektronischen Nachricht zur Übertragung an das Empfangsgerät (3) über den ersten elektronischen Übertragungsweg (4) mit dem in der elektronische Hilfsnachricht enthaltenen Kommunikationslink **durch** ein Abrufmodul (15), wobei die verschlüsselte elektronische Nachricht **durch** ein Entschlüsselungsmodul (17) mittels des über den zweiten Kommunikationskanal (13) an das Schlüssel-Empfangsmodul (12) übertragenen kryptographischen Schlüssels entschlüsselt wird.

2. Verfahren nach Anspruch 1, **dadurch gekennzeichnet, dass** der kryptographische Schlüssel mittels eines Mobilfunk-Übertragungskanal, mittels eines Telekommunikations-Übertragungskanals oder mittels eines sprachbasierten elektronischen Übertragungskanals an das Schlüssel-Empfangsmodul übertragen wird.

3. Verfahren nach Anspruch 1 oder 2, **dadurch gekennzeichnet, dass** die den Kommunikationslink enthaltene elektronische Hilfsnachricht als den Kommunikationslink enthaltene E-Mail an das Link-Empfangsmodul (20) übertragen wird.

4. Verfahren nach einem der vorhergehenden Ansprüche, **dadurch gekennzeichnet, dass** mit Hilfe des Abrufmoduls (15) eine internetbasierte Kommunikationsverbindung als Teil des ersten elektronischen Übertragungskanals (4) zu einem in dem Nachrichtenserver (5) vorgesehenen Webmodul (14) hergestellt, dass mittels des Kommunikationslink eine Abrufanfrage bezüglich der unter dem Kommunikationslink abgespeicherten verschlüsselten elektronischen Nachricht an den Nachrichtenserver (5) gesendet, dass der an das Schlüssel-Empfangsmodul (12) übertragene kryptographische Schlüssel an das auf dem Nachrichtenserver (5) vorgesehene Entschlüsselungsmodul übertragen, dass die verschlüsselte elektronische Nachricht durch das Entschlüsselungsmodul auf dem Nachrichtenserver (5) entschlüsselt und die entschlüsselte elektronische Nachricht von dem Entschlüsselungsmodul des Nachrichtenservers (5) an das Empfangsgerät (3) übertragen wird.

5. Verfahren nach einem der vorhergehenden Ansprüche, **dadurch gekennzeichnet, dass** mit Hilfe des Abrufmoduls (15) eine internetbasierte Kommunikationsverbindung als Teil des ersten elektronischen Übertragungskanals (4) zu einem in dem Nachrichtenserver (5) vorgesehenen Webmodul (14) hergestellt, dass mittels des Kommunikationslink eine Abrufanfrage bezüglich der unter dem Kommunikationslink abgespeicherten verschlüsselten elektronischen Nachricht an den Nachrichtenserver (5) gesendet, dass die verschlüsselte elektronische Nachricht aufgrund der Abrufanfrage an das auf dem Empfangsgerät (3) vorgesehenen Entschlüsselungsmodul (17) übertragen und dass die verschlüsselte elektronische Nachricht mittels des dem Entschlüsselungsmodul (17) bereitgestellten kryptographischen Schlüssels auf dem Empfangsgerät (3) entschlüsselt wird.

6. Verfahren nach Anspruch 5, **dadurch gekennzeichnet, dass** die elektronische Hilfsnachricht mit dem Kommunikationslink an das auf einem Link-Empfangsgerät vorgesehenen Link-Empfangsmodul übertragen, dass die Abrufanfrage durch das auf dem Link-Empfangsgerät vorgesehenen Abrufmodul gesendet, dass der kryptographische Schlüssel durch das auf dem Empfangsgerät vorgesehenen Schlüssel-Empfangsmodul dem auf dem Empfangsgerät vorgesehenen Entschlüsselungsmodul bereitgestellt und die verschlüsselte elektronische Nachricht dann auf dem Empfangsgerät durch das Entschlüsselungsmodul mittels des kryptographischen Schlüssels entschlüsselt wird.

7. Verfahren nach Anspruch 5 oder 6, **dadurch gekennzeichnet, dass** der an das Schlüssel-Empfangsmodul übertragene kryptographische Schlüssel mit Hilfe eines an dem Empfangsgerät vorgesehenen Schlüssel-Eingabemoduls zur Bereitstellung des kryptographischen Schlüssels an das Entschlüsselungsmodul eingegeben und der eingegebene kryptographische Schlüssel zum Entschlüsseln der verschlüsselten elektronischen Nachricht dem Entschlüsselungsmodul bereitgestellt wird.

8. Verfahren nach einem der Ansprüche 5 bis 7, **dadurch gekennzeichnet, dass** ein asymmetrischer kryptographischer Schlüssel bestehend aus einem ersten Schlüsselteil (öffentlich) und einem zweiten Schlüsselteil (geheim) von einem Schlüsselgenerierungsmodul (18) erzeugt und der an das Schlüssel-Empfangsmodul (12) übertragene kryptographische Schlüssel durch eine Schlüsselaustauscheinrichtung (19) mit Hilfe einer Ver- und Entschlüsselung des kryptographischen Schlüssels mittels des asymmetrischen kryptographischen Schlüssels sicher an das Entschlüsselungsmodul über einen elektronischen Übertragungskanal übertragen wird.

9. Verfahren nach Anspruch 8, **dadurch gekennzeichnet, dass** die Schlüsselaustauscheinrichtung ein erstes Schlüssel-Austauschmodul (19a) und ein zweites Schlüssel-Austauschmodul (19b) hat, wobei der erste Schlüsselteil (öffentlich) an das erste Schlüssel-Austauschmodul und der zweite Schlüsselteil (geheim) an das zweite Schlüssel-Austauschmodul übertragen wird, und wobei durch die Schlüsselaustauscheinrichtung die folgenden Schritte durchgeführt werden:
- Verschlüsseln eines generierten kryptographischen Hilfsschlüssels mittels des ersten Schlüsselteils (öffentlich) durch das erste Schlüssel-Austauschmodul und Aussenden des verschlüsselten kryptographischen Hilfsschlüssels an das zweite Schlüssel-Austauschmodul,
- Entschlüsseln des übertragenen verschlüsselten kryptographischen Hilfsschlüssels mittels des zweiten Schlüsselteils (geheim) durch das zweite Schlüssel-Austauschmodul,
- Verschlüsseln des an das Schlüssel-Empfangsmodul übertragenen kryptographischen Schlüssels mittels des an das zweite Schlüssel-Austauschmodul übertragenen kryptographischen Hilfsschlüssels durch das zweite Schlüssel-Austauschmodul und Aussenden des verschlüsselten kryptographischen Schlüssels an das erste Schlüssel-Austauschmodul, und
- Entschlüsseln des an das erste Schlüssel-Austauschmodul übertragenen verschlüsselten kryptographischen Schlüssels mittels des kryptographischen Hilfsschlüssels durch das erste Schlüssel-Austauschmodul und Bereitstellen des kryptographischen Schlüssels an das Entschlüsselungsmodul.

10. Verfahren nach einem der vorhergehenden Ansprüche, **dadurch gekennzeichnet, dass** in der elektronischen Schlüsselnachricht ein Authentifizierungslink zur Identifikation an dem Nachrichtenserver bezüglich der auf dem Nachrichtenserver abgespeicherten verschlüsselten elektronischen Nachricht enthalten ist.

11. Verfahren nach einem der vorhergehenden Ansprüche, **dadurch gekennzeichnet, dass** der kryptographische Schlüssel an das Schlüssel-Empfangsmodul (12) über den zweiten elektronischen Übertragungsweg (13) ausgesendet wird, indem
- der kryptographische Schlüssel mittels des öffentlichen Schlüssels eines asymmetrischen kryptographischen Schlüssels eines Serviceprovider durch das Sendegerät (11) verschlüsselt und so verschlüsselt an den Nachrichtenserver übertragen wird, um den so verschlüsselten kryptographischen Schlüssel in dem Datenspeicher zu hinterlegen,
- der kryptographische Schlüssel zur Übertragung an das Schlüssel-Empfangsmodul (12) angefordert wird, wobei der verschlüsselte und hinterlegte kryptographische Schlüssel daraufhin an den Serviceprovider gesendet wird, und
- der verschlüsselte kryptographische Schlüssel mittels des entsprechenden privaten Schlüssels des asymmetrischen kryptographischen Schlüssels von dem Serviceprovider entschlüsselt und anschließend von dem Schlüsselübertragungsmodul (11) über den zweiten elektronischen Übertragungskanal an das Schlüssel-Empfangsmodul (12) ausgesendet wird.

12. Verfahren nach Anspruch 11, **dadurch gekennzeichnet, dass** der kryptographische Schlüssel von dem Schlüssel-Empfangsmodul (11) automatisch an das Empfangsgerät (3) übertragen wird, indem
- ein kryptographischer Übertragungsschlüssel durch das Empfangsgerät (3) generiert, mit dem öffentlichen Schlüssel des Serviceprovider verschlüsselt und der so verschlüsselte kryptographische Übertragungsschlüssel an den Serviceprovider übertragen wird,
- der verschlüsselte kryptographische Übertragungschlüssel mittels des entsprechenden privaten Schlüssels des asymmetrischen kryptographischen Schlüssels von dem Serviceprovider entschlüsselt wird,
- der durch den Serviceprovider entschlüsselte kryptographische Schlüssel mittels des entschlüsselten kryptographischen Übertragungsschlüssels von dem Serviceprovider verschlüsselt und so verschlüsselt von dem Schlüsselübertragungsmodul (11) über den zweiten elektronischen Übertragungskanal an das Schlüssel-Empfangsmodul (12) ausgesendet wird,
- der von dem Schlüssel-Empfangsmodul (12) empfangene, verschlüsselte kryptographische Schlüssel über einen elektronischen Übertragungskanal an das Empfangsgerät (3) übertragen wird, und
- der verschlüsselte kryptographische Schlüssel mittels des kryptographischen Übertragungsschlüssels von dem Empfangsgerät (3) entschlüsselt und zur Entschlüsselung der verschlüsselten elektronischen Nachricht durch das Entschlüsselungsmodul verwendet wird.

13. System zum Übertragen einer elektronischen Nachricht von einem Sendegerät eines ersten Benutzers an zumindest ein Empfangsgerät eines zweiten Benutzers, eingerichtet zur Durchführung des Verfahrens nach einem der vorhergehenden Ansprüche, wobei das Sendegerät zum Erstellen der elektronischen Nachricht eingerichtet und das System zum Übertragen der elektronischen Nachricht von dem Sendegerät an das Empfangsgerät über einen ersten elektronischen Übertragungskanal ausgebildet ist, **dadurch gekennzeichnet, dass**
- ein Verschlüsselungsmodul zum Verschlüsseln der erstellten elektronischen Nachricht mittels eines kryptographischen Schlüssels,
- ein Nachrichtenserver zum Generieren eines Kommunikationslink und zum Abspeichern der verschlüsselten elektronischen Nachricht in einem Datenspeicher des Nachrichtenservers unter dem Kommunikationslink,
- ein Benachrichtigungsmodul zum Generieren einer den Kommunikationslink enthaltenen elektronischen Hilfsnachricht und zum Aussenden der elektronischen Hilfsnachricht an ein Link-Empfangsmodul,
- ein Schlüsselübertragungsmodul zum Aussenden einer den kryptographischen Schlüssel enthaltenen elektronischen Schlüsselnachricht an ein Schlüssel-Empfangsmodul über einen von dem ersten elektronischen Übertragungskanal verschiedenen zweiten elektronischen Übertragungskanal, und
- ein Abrufmodul zum Abrufen der in dem Datenspeicher des Nachrichtenservers abgespeicherten elektronischen Nachricht zur Übertragung an das Empfangsgerät über den ersten elektronischen Übertragungskanal mit dem in der elektronischen Hilfsnachricht enthaltenen Kommunikationslink vorgesehen sind, wobei ein Entschlüsselungsmodul zum Entschlüsseln der verschlüsselten elektronischen Nachricht mittels des über den zweiten Kommunikationskanal übertragenen kryptographischen Schlüssels eingerichtet ist.

14. System nach Anspruch 13, **dadurch gekennzeichnet, dass** das System ein Schlüsselgenerierungsmodul zum Generieren eines asymmetrischen kryptographischen Schlüssels und eine Schlüsselaustauscheinrichtung zum sicheren Übertragen des kryptographischen Schlüssels von dem Schlüssel-Empfangsmodul an das Entschlüsselungsmodul aufweist.
